# EUROPÄISCHE PATENTANMELDUNG

(11) **EP 0 873 679 A2**
(43) Veröffentlichungstag der Anmeldung: **28.10.1998**
(21) Anmeldenummer: 98106552.7
(22) Anmeldetag: 03.08.1994
(51) Int. Cl.: A01D 90/08, A01D 85/00

(54) **Landwirtschaftliche Erntemaschine**

(30) Priorität: 17.08.1993 DE 4327591; 17.08.1993 DE 4327593
(62) Teilanmeldung aus: 94112084.2
(71) Anmelder: SAME DEUTZ-FAHR S.P.A., 24047 Treviglio (Bergamo) (IT)
(72) Erfinder: von Allwörden, Wilhelm, 89168 Oberstotzingen (DE)
(74) Vertreter: Dreiss, Fuhlendorf, Steimle & Becker

(57) **Zusammenfassung**

Die Erfindung betrifft eine landwirtschaftliche Erntemaschine (1) zum Aufnehmen eines Erntegutes (6) und Abgeben des Erntegutes (6) über eine Abgabevorrichtung, wobei die Erntemaschine (1) mit einem Ladewagen (2) verbunden ist und der Ladewagen (2) zur Aufnahme des Ernteguts (6) in einer Position hinter der Erntemaschine (1) dient, und zwischen der Erntemaschine (1) und der Ladefläche des Ladewagens (2) eine Übergabevorrichtung vorgesehen ist, die das Erntegut (6) unabhängig von der Fahrtrichtung der Erntemaschine (1) auf den Ladewagen (2) leitet. Dabei weist die Übergabevorrichtung eine Ablagevorrichtung (7) für das Erntegut 6 auf. Die Ablagevorrichtung (7) ist schwenkbar gelagert, bei der Übergabe des Erntegutes (6) von der Erntemaschine (1) zur Übergabevorrichtung in Richtung der Längsachse der Erntemaschine (1) ausgerichtet und bei der Übergabe des Erntegutes (6) von der Übergabevorrichtung auf die Ladefläche des Ladewagens (2) kraftbeaufschlagt in Richtung der Längsachse des Ladewagens (2) bewegbar ist.

## Beschreibung

Die Erfindung betrifft eine landwirtschaftliche Erntemaschine gemäß dem Oberbegriff des Anspruchs 1. Die Erfindung betrifft auch ein Verfahren zum Betreiben einer landwirtschaftlichen Erntemaschine gemäß dem Oberbegriff des Anspruchs 6.

Aus der nächstkommenden FR-A-2 127 753 ist ein Ladewagen bekannt, der zur Aufnahme von Erntegut ausgebildet ist. Mit diesem Ladewagen ist jedoch eine sichere Aufnahme einer Einrichtung der landwirtschaftlichen Erntemaschine nicht möglich.

Der Erfindung liegt die Aufgabe zugrunde, eine landwirtschaftlichen Erntemaschine und/oder ein Verfahren zum Betreiben einer landwirtschaftlichen Erntemaschine bereitzustellen, mit der bzw. dem Erntegut problemlos auf einen Ladewagen übergeben werden kann.

Diese Aufgabe wird erfindungsgemäß durch eine landwirtschaftlichen Erntemaschine mit den Merkmalen des Anspruchs 1 und mit einem Verfahren mit den Merkmalen des Anspruchs 6 gelöst.

In der folgenden Beschreibung sowie in der Zeichnungsbeschreibung und den Figuren wird davon ausgegangen, daß die Erntemaschine eine landwirtschaftliche Großballenpresse, insbesondere eine selbst fahrende Großballenpresse ist und das Ladegut aus Erntegut (beispielsweise Stroh oder Heu) besteht, aus den Großballen, beispielsweise mit zylindrischem und insbesondere mit quaderförmigem Querschnitt, geformt sind. Hierbei handelt es sich um eine bevorzugte Ausführung der Erfindung, auf die der Erfindungsgedanke jedoch alleine nicht beschränkt ist.

Die Anordnung einer Übergabevorrichtung, wobei diese mit der Erntemaschine bzw. dem Ladewagen verbunden ist und mit dem Ladewagen bzw. der Erntemaschine verbindbar ist, die das Erntegut zumindest unabhängig von der Fahrtrichtung der Erntemaschine auf den Ladewagen leitet, hat den Vorteil, daß das Erntegut jederzeit von der Erntemaschine an den Ladewagen abgebbar ist. Somit erfolgt die Überleitung sowohl bei Geradeausfahrt der Erntemaschine mit dem angehängten Ladewagen als auch bei Kurvenfahrt. Darüber hinaus hat die Anordnung der Übergabevorrichtung den Vorteil, daß eine Überleitung des Erntegutes auch in Abhängigkeit des Verarbeitungszustandes des Erntegutes erfolgen kann.

In Weiterbildung der Erfindung weist die Übergabevorrichtung zumindest eine dreh- und höhenverschwenkbare Ablagevorrichtung auf. Eine Drehverschwenkung hat den Vorteil, daß damit ein Richtungsversatz zwischen der Erntemaschine und dem Ladewagen ausgleichbar ist. Ergänzend dazu ist die Höhenverschwenkbarkeit der Ablagevorrichtung von Vorteil, um bspw. Unebenheiten des Bodens, die zu einem Höhenunterschied zwischen der Abgabevorrichtung der Erntemaschine und des Ladewagens führen, auszugleichen. Darüber hinaus ist es denkbar, daß die höhenverschwenkbare Ablagevorrichtung eine Ablage des Erntegutes in mehreren Ebenen auf dem Ladewagen ermöglicht.

In Weiterbildung der Erfindung ist der Ablagevorrichtung der Erntemaschine ein zumindest drehbar an den Ladewagen angeordnete Fangvorrichtung, die kraftbeaufschlagt in Richtung der Längsachse der Erntemaschine bewegbar ist, zugeordnet. In einer alternativen Ausgestaltung weist der Ladewagen eine Führungseinrichtung auf, die ein Führungselement der Ablagevorrichtung aufnimmt und diese Ablagevorrichtung in Abhängigkeit des Verarbeitungszustandes des Erntegutes und/oder der Fahrtrichtung der Erntemaschine führt. Diese beiden Ausgestaltungen der Übergabevorrichtung hat den Vorteil, daß das Überleiten des Erntegutes sowohl während der Geradeausfahrt als auch während der Kurvenfahrt der Erntemaschine erfolgt. Die Funktionsweise der Fangvorrichtung bzw. der Führungsvorrichtung ist anhand der Figuren näher beschrieben.

In Weiterbildung der Erfindung ist der Fangvorrichtung bzw. der Führungsvorrichtung eine Rückstellvorrichtung zugeordnet, die die Fangvorrichtung bzw. die Führungsvorrichtung in eine Position im wesentlichen in Längsrichtung des Ladewagens bringt. Auch die Funktionsweise der Rückstellvorrichtung ist anhand der Figuren gezeigt und näher beschrieben.

Weiterhin ist es erfindungsgemäß vorgesehen, daß der Ladewagen ein anhängbarer Transportwagen für zumindest eine Einrichtung der landwirtschaftlichen Erntemaschine, wobei die Einrichtung auf den Transportwagen aufladbar ist, ist und zumindest eine Vorrichtung zur Aufnahme von Erntegut, das von der Erntemaschine abgebbar ist, aufweist.

In einer Weiterbildung der Erfindung ist die Vorrichtung zur Aufnahme von Ladegut eine Fördervorrichtung für das Ladegut im Bereich einer Ladefläche des Ladewagens. In diesem Fall ist der Ladewagen mit einer Fördervorrichtung ausgerüstet, die es gestattet, daß von der landwirtschaftlichen Erntemaschine abgegebene Erntegut von einem Bereich in dem das Ladegut aufgegeben wird, in einen rückwärtigen Bereich des Ladewagens zu befördern. Zu diesem Zweck ist es denkbar, daß das Ladegut aufgrund seiner Trägheit die Förderbewegung selbstätig durchführt oder die Fördervorrichtung antreibbar ist (beispielsweise mittels einer Zapfwellenverbindung zwischen der Erntemaschine und dem Ladewagen).

Weitere Merkmale, Vorteile und Einzelheiten der Erfindung ergeben sich aus den Unteransprüchen und der Zeichnung sowie aus der nachfolgenden Beschreibung.

In der Zeichnung zeigen:
- Figur 1:: einen Ladewagen in der Seitenansicht;
- Figur 2:: einen Ladewagen in der Draufsicht;
- Figur 3:: einen doppelstöckig ausgebildeten Ladewagen in Seitenansicht; und
- Figur 4:: einen Ladewagen in der Draufsicht/Seitenansicht.

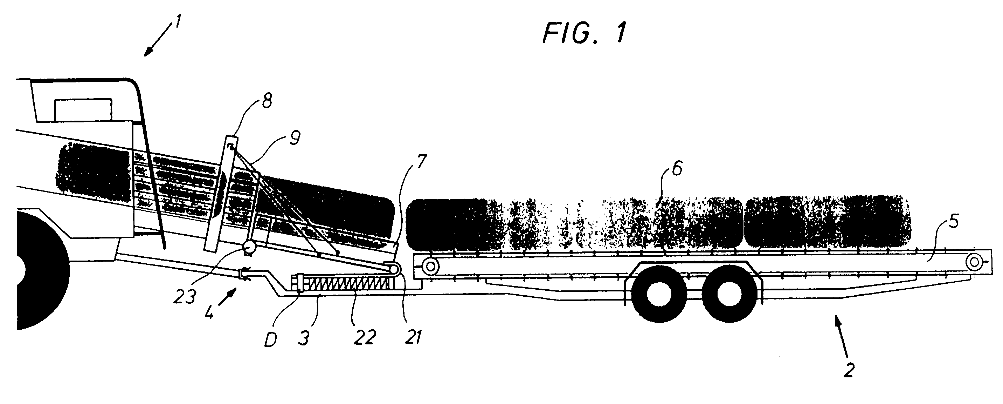

Figur 1 zeigt einen Ladewagen in der Seitenansicht. An einer landwirtschaftlichen Erntemaschine 1, deren rückwärtiges Ende gezeigt ist, ist ein Ladewagen 2 über dessen Deichsel 3 an einer Kupplung 4 angehangen. Dieser Ladewagen 2 dient einerseits dem Transport einer Einrichtung der landwirtschaftlichen Erntemaschine 1, bei der es sich beispielsweise um einen Mähdrescher (Einrichtung: Schneidwerk) oder auch um eine selbstfahrende Großballenpresse (Einrichtung: Pick-Up) handeln kann, zum Ernteort oder von diesem weg. Neben Aufnahme- beziehungsweise Befestigungselementen für die abnehmbare Einrichtung der Erntemaschine 1 (diese Elemente sind in den Figuren nicht gezeigt), weist der Ladewagen 2 einen Kratzboden 5 auf, der - wie in Figur 1 gezeigt - quaderförmige Großballen 6 aufnimmt. Dieser Kratzboden 5 ist beispielsweise jedesmal dann antreibbar, wenn ein Großballen 6 über eine der Erntemaschine 1 zugeordnete Ablagevorrichtung 7 (Ladeschurre) auf dem Kratzboden 5 abgelegt wird. Der Antrieb des Kratzbodens 5 erfolgt so lange, beziehungsweise über eine solche Strecke, die im wesentlichen einer Länge des Großballens 6 entspricht. In Figur ist darüber hinaus gezeigt, daß die Ablagevorrichtung 7 mit einem Pfosten 8 verbunden ist, wobei dies unter Zwischenschaltung zumindest einer Kette 9 erfolgt. Der Deichsel 3 ist eine Fangvorrichtung 21 zugeordnet, die eine als Feder 22 ausgebildete Rückstellvorrichtung aufweist. Die Fangvorrichtung 21 ist über einen Drehpunkt D zumindest drehbar an der Deichsel 3 gelagert, so daß die von der Fangvorrichtung 21 aufgenommene Ablagevorrichtung 7 um den Drehpunkt 23 verschwenkbar ist.

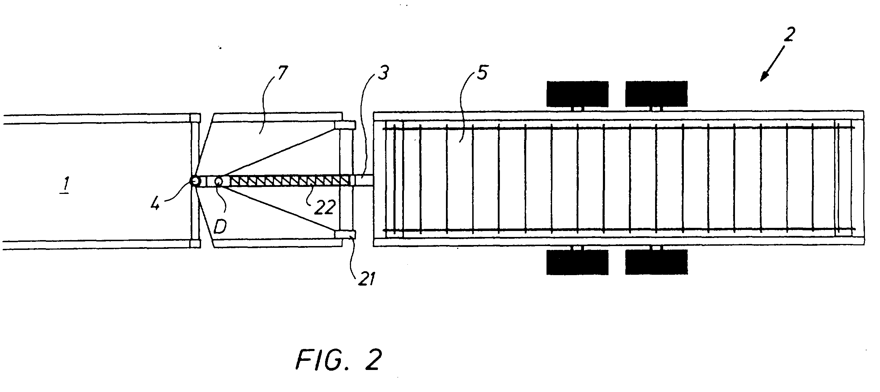

Figur 2 zeigt den erfindungsgemäß ausgebildeten Ladewagen in einer Draufsicht. Neben den in Figur 1 gezeigten und mit den gleichen Bezugsziffern versehenen Komponenten ist der Deichsel 3 die Fangvorrichtung 21 zugeordnet, die die als Feder 22 ausgebildete Rückstellvorrichtung aufweist. Die Fangvorrichtung 21 ist über den Drehpunkt 23 zumindest drehbar gelagert, so daß die von der Fangvorrichtung 21 aufgenommene Ablagevorrichtung 7 um den Drehpunkt 23 verschwenkbar ist.

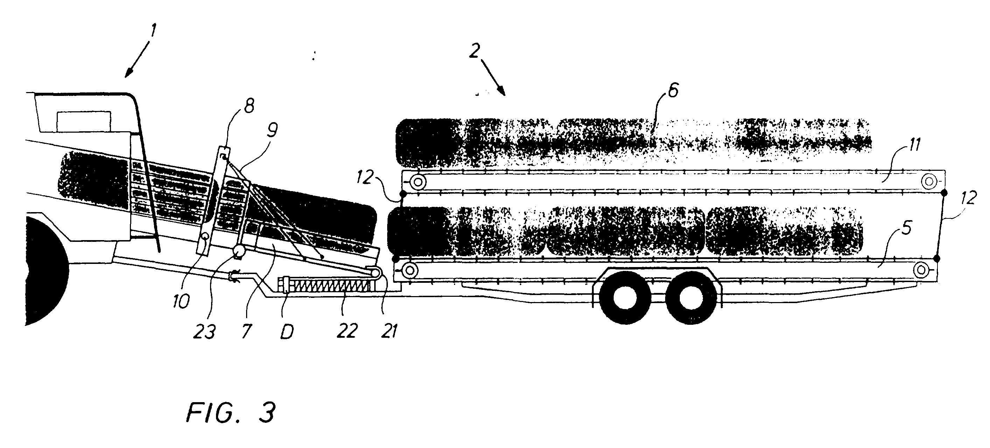

Figur 3 zeigt einen doppelstöckig ausgebildeten Ladewagen in der Seitenansicht. Neben den in den vorangegangen Figuren gezeigten und mit den gleichen Bezugsziffern versehenen Komponenten ist in Figur 3 ein weiterer Kratzboden 11 gezeigt, der über Verbindungselemente 12 (beispielsweise Hebelarme) in einer Ebene oberhalb und parallel zu dem Kratzboden 5 angeordnet ist. Über diese Verbindungselemente 12 ist der Kratzboden 11 verschwenkbar, so daß nach Auffüllung der Ladefläche in der unteren Ebene die Ablagevorrichtung 7 hochgeschwenkt, so daß der obere Kratzboden 11 mit Großballen 6 beladbar ist. Zum Verschwenken der Ablagevorrichtung 7 ist der Pfosten 8 um einen Drehpunkt 10 gelagert, wobei der Pfosten 8 elektromotorisch, hydraulisch oder auch manuell in eine Position verschwenkbar ist, die es gestattet, den Kratzboden 11 über die Ablagevorrichtung 7 mit Großballen 6 zu beladen.

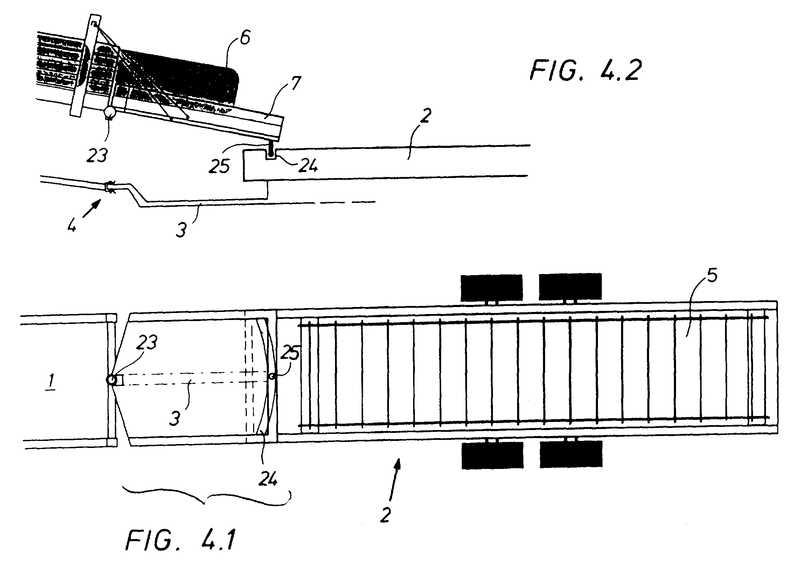

Figur 4 zeigt eine alternative Ausgestaltung der Übergabevorrichtung, wobei diese in Figur 4.1 der Draufsicht und in Figur 4.2 in der Seitenansicht dargestellt ist. Wie diesen Figuren zu entnehmen ist, weist der Ladewagen eine Führungsvorrichtung 24 auf, die halbkreisförmig bspw. U-profilförmig ausgebildet ist. Diese Führungsvorrichtung 24 ist in einem Bereich des Ladewagens 2 angeordnet, der der Erntemaschine 1 zugeordnet ist. In diese Führungsvorrichtung 24 greift - nach dem Anhängen des Ladewagens 2 an die Erntemaschine 1 - ein Führungselement 25 (bspw. Zapfen) ein, nachdem die Ablagevorrichtung während des Anhängevorganges angehoben und danach abgesenkt worden ist. Aufgrund der Zuordnung einer Rückstellvorrichtung (in Figur 4 einer besseren Übersicht wegen nicht dargestellt) erfolgt die Überleitung des Großballens 6 unabhängig von der Fahrtrichtung der Erntemaschine 1 auf den Ladewagen 2.

Das Verfahren zum Betreiben einer landwirtschaftlichen Erntemaschine, die ein aufgenommenes und verarbeitetes Erntegut über eine Abgabevorrichtung abgibt, sieht vor, daß ein Ladewagen zur Aufnahme des Erntegutes in einer Position hinter der Erntemaschine mit dieser verbunden ist, und daß das Erntegut über eine zwischen der Abgabevorrichtung der Erntemaschine und dem Ladewagen angeordnete Übergabevorrichtung zumindest unabhängig von der Fahrtrichtung der Erntemaschine auf den Ladewagen geleitet wird. Dieses Verfahren hat den Vorteil, wenn die landwirtschaftliche Erntemaschine eine selbstfahrende Großballenpresse und das Erntegut insbesondere quaderförmige Großballen sind, daß immer dann, wenn ein Großballen fertig hergestellt (gebunden) ist, dieser auf dem Ladewagen - unabhängig von der Fahrtrichtung der Erntemaschine - ablegbar ist. Damit kann der Großballen sowohl bei Geradeausfahrt als auch bei Kurvenfahrt der Erntemaschine abgegeben werden.

Bezugnehmend auf die Figuren 1 und 2 ist die Ablagevorrichtung 7 Bestandteil der Übergabevorrichtung. Die Ablagevorrichtung 7 wird - wie in Figur 2 gezeigt - durch die Feder 22 in ihrer Neutralposition, d. h. in Richtung einer Längsachse des Transportwagens 2 gezogen. Bei Geradeausfahrt der Erntemaschine erfolgt dann die Überleitung des fertig gepreßten Großballens 6 über die Abgabevorrichtung der Erntemaschine 1, weiter über die Ablagevorrichtung 7 auf den Kratzboden 5 des Transportwagens 2. Befindet sich die Erntemaschine 1 auf Kurvenfahrt und hat ein Großballen 6 noch nicht seinen fertigen Zustand erreicht, liegt dieser auf der Ablagevorrichtung 7, die, wie den Figuren zu entnehmen ist, mit seitlichen Führungselementen versehen ist, wodurch der Großballen 6 die Ablagevorrichtung 7 in Richtung der Längsachse der Erntemaschine 1 hält. Sobald ein nachfolgender Großballen den fertiggestellten Großballen komplett auf die Ablagevorrichtung 7 befördert, wird diese aufgrund der Federkraft der Feder 22 in Richtung der Längsachse des Transportwagens 2 gezogen, so daß der fertige Großballen von dem Kratzboden 5 erfaßbar und auf den Transportwagen 2 beförderbar ist. Ein vorteilhafter weiterer Verfahrensschritt besteht darin, daß die Überleitung des fertig gestellten Großballens erst dann erfolgt, wenn sich die Übergabevorrichtung bzw. die Ablagevorrichtung und der Ladewagen im wesentlichen auf einer gemeinsamen Längsachse befindet. So ist es bspw. denkbar, Sensoren einzusetzen, mit denen die Übereinstimmung der Längsachse der Ablagevorrichtung 7 und der Längsachse des Transportwagens 2 festgestellt wird, und die Überleitung erst dann erfolgt, wenn sich diese auf einer gemeinsamen Längsachse befinden. Dies kann bspw. dergestalt erfolgen, daß der Antrieb des Kratzbodens 5 erst bei Übereinstimmung der Längsachsen betätigt wird.

Weiterhin ist es denkbar, daß die Übergabevorrichtung bzw. die Ablagevorrichtung in Abhängigkeit des Verarbeitungszustandes des Erntegutes im wesentlichen in eine Position auf der Längsachse des Transportwagens gebracht wird. Hierbei ist es denkbar, daß im Falle der Fertigstellung des Großballens, die mittels geeigneter Sensoren festgestellt wird, und wenn der Großballen auf der Ablagevorrichtung 7 liegt, diese im wesentlichen in eine Position auf der Längsachse des Ladewagens gebracht wird. Dies kann bspw. mittels Hydraulikkraft geschehen, wobei an der Ablagevorrichtung 7 Hydraulikzylinder derart angreifen, die eine Verschwenkung in Richtung der Längsachse und auch aus der Längsachse heraus ermöglichen.

In einer weiteren Ausgestaltung der Erfindung ist der Ladewagen derart geneigt mit der Erntemaschine verbunden, daß sich das übergeleitete Erntegut aufgrund seiner Hangabtriebskraft in Richtung des rückwärtigen Endes des Ladewagens selbstätig bewegt. Insbesondere im Zusammenhang mit der Feststellung der Position der Ablagevorrichtung 7 hat dies den Vorteil, daß
der Transportwagen keinerlei Fördervorrichtung benötigt, da sich die Großballen selbstätig bewegen. Zu diesem Zweck kann es vorgesehen werden, daß die Überleitung des Großballens von der Ablagevorrichtung auf den Transportwagen so lange verhindert wird, wie deren Längsachsen nicht übereinstimmen. Wird dann eine Übereinstimmung festgestellt, kann die Überleitung freigegeben werden. Ergänzend dazu ist es vorgesehen, daß der Aufnahme- bzw. Verarbeitungsvorgang in der Erntemaschine zumindest unterbrochen wird, wenn das Ladevolumens des Ladewagen zumindest annähernd erschöpft ist. Hierbei ist es bspw. denkbar, daß die auf den Transportwagen übergeleiteten Großballen gezählt werden und der Aufnahme bzw. Verarbeitungsvorgang in Abhängigkeit eines Grenzwertes unterbrochen bzw. gestoppt wird. Unter einer Unterbrechung ist ebenfalls zu verstehen, daß die Erntemaschine selbst mit einem Vorratsraum (insbesondere im Aufnamebereich) ausgerüstet ist, so daß der eigentliche Preßvorgang gestoppt, jedoch der Aufnahmevorgang ununterbrochen weiterlaufen kann. Ebenfalls ergänzend zu der Positonsfeststellung der Ablagevorrichtung 7 ist es denkbar, die seitlich an dem Transportwagen angeordneten Führungseinrichtungen derart verschwenkbar und kraftbeaufschlagt anzuordnen, daß diese einen schief auf den Transportwagen geleiteten Großballen diesen in die gewünschte Position bewegen.

## Patentansprüche

1. Landwirtschaftliche Erntemaschine (1) zum Aufnehmen eines Erntegutes (6) und Abgeben des Erntegutes (6) über eine Abgabevorrichtung, wobei die Erntemaschine (1) mit einem Ladewagen (2) verbunden ist und der Ladewagen (2) zur Aufnahme des Ernteguts (6) in einer Position hinter der Erntemaschine (1) dient, und zwischen der Erntemaschine (1) und der Ladefläche des Ladewagens (2) eine Übergabevorrichtung vorgesehen ist, die das Erntegut (6) unabhängig von der Fahrtrichtung der Erntemaschine (1) auf den Ladewagen (2) leitet, dadurch gekennzeichnet, dass die Übergabevorrichtung eine Ablagevorrichtung (7) für das Erntegut 6 aufweist, daß die Ablagevorrichtung (7) schwenkbar gelagert ist, daß die Ablagevorrichtung (7) bei der Übergabe des Erntegutes (6) von der Erntemaschine (1) zur Übergabevorrichtung in Richtung der Längsachse der Erntemaschine (1) ausgerichtet ist und daß die Ablagevorrichtung (7) bei der Übergabe des Erntegutes (6) von der Übergabevorrichtung auf die Ladefläche des Ladewagens (2) kraftbeaufschlagt in Richtung der Längsachse des Ladewagens (2) bewegbar ist.

2. Landwirtschaftliche Erntemaschine nach Anspruch 1, dadurch gekennzeichnet, daß die Übergabevorrichtung zumindest eine dreh- und höhenverschwenkbare Ablagevorrichtung (7) der Abgabevorrichtung der Erntemaschine (1) aufweist.

3. Landwirtschaftliche Erntemaschine nach einem der vorhergehenden Ansprüche, dadurch gekennzeichnet, daß der Ablagevorrichtung (7) der Erntemaschine (1) eine zumindest drehbar an dem Ladewagen (2) angeordnete Fangvorrichtung (21) zugeordnet ist, die kraftbeaufschlagt in Richtung der Längsachse des Ladewagens (2) bewegbar ist.

4. Landwirtschaftliche Erntemaschine nach einem der vorhergehenden Ansprüche, dadurch gekennzeichnet, daß der Ladewagen (2) eine Führungseinrichtung (24) aufweist, die ein Führungselement der Ablagevorrichtung (7) aufnimmt und diese Ablagevorrichtung (7) in Abhängigkeit des Verarbeitungszustandes des Großballens (6) und/oder der Fahrtrichtung der Erntemaschine (1) führt.

5. Landwirtschaftliche Erntemaschine nach einem der vorhergehenden Ansprüche, dadurch gekennzeichnet, daß der Fangvorrichtung (21) beziehungsweise der Führungseinrichtung (24) eine Rückstellvorrichtung zugeordnet ist, die die Fangvorrichtung (21) beziehungsweise die Führungseinrichtung (24) in eine Position im wesentlichen in Längsrichtung des Ladewagens (2) bringt.

6. Verfahren zum Betreiben einer landwirtschaftlichen Erntemaschine (1), die ein Erntegut (6) aufnimmt, verarbeitet und über eine Abgabevorrichtung abgibt, wobei die Erntemaschine (1) mit einem Ladewagen (2) verbunden wird, und der Ladewagen (2) zur Aufnahme des Erntegutes (6) in einer Position hinter der Erntemaschine (1) dient und das Erntegut (6) über eine zwischen der Abgabevorrichtung der Erntemaschine (1) und der Ladefläche des Ladewagens (2) angeordnete Übergabevorrichtung auf die Ladefläche des Ladewagens (2) geleitet wird, dadurch gekennzeichnet, dass bei der Überleitung des Erntegutes (6) von der Erntemaschine (1) auf die Übergabevorrichtung sich eine das Erntegut (6) aufnehmende Ablagevorrichtung (7) und die Erntemaschine (1) im wesentlichen auf einer gemeinsamen Längsachse befinden, daß die Ablagevorrichtung (7) kraftbeaufschlagt in Richtung der Längsachse der Ladefläche des Ladewagens (2) verschwenkt wird und daß die Überleitung des Erntegutes (6) von der Übergabevorrichtung auf die Ladefläche des Ladewagens (2) unabhängig von der Fahrtrichtung der Erntemaschine (1) erfolgt, wenn sich die Ablagevorrichtung (7) der Übergabevorrichtung und die Ladefläche des Ladewagens (2) im wesentlichen auf einer gemeinsamen Längsachse befinden.

7. Verfahren zum Betreiben einer landwirtschaftliche Erntemaschine, nach Anspruch 6, dadurch gekennzeichnet, daß die Übergabevorrichtung in Abhängigkeit des Verarbeitungszustandes des Erntegutes (6) im wesentlichen in eine Position auf der Längsachse des Ladewagens (2) gebracht wird.

8. Verfahren zum Betreiben einer landwirtschaftliche Erntemaschine, nach Anspruch 6 oder 7, dadurch gekennzeichnet, daß der Ladewagen (2) derart geneigt mit der Erntemaschine (1) verbunden ist, daß sich das übergeleitete Erntegut (6) aufgrund einer Hangabtriebskraft in Richtung des rückwärtigen Endes des Ladewagens (2) selbsttätig bewegt.

9. Verfahren zum Betreiben einer landwirtschaftliche Erntemaschine, nach einem der Ansprüche 6 bis 8, dadurch gekennzeichnet, daß der Aufnahme- beziehungsweise Verarbeitungsvorgang zumindest unterbrochen wird, wenn das Ladevolumen des Ladewagens (2) zumindest annähernd erschöpft ist.
